# EUROPÄISCHE PATENTSCHRIFT

(11) **EP 2 810 560 B1**
(45) Veröffentlichungstag und Bekanntmachung des Hinweises auf die Patenterteilung: **03.01.2018**
(21) Anmeldenummer: 13170664.0
(22) Anmeldetag: 05.06.2013
(51) Int. Cl.: A21B 1/10, A21B 1/40

(54) **Backofen mit mehreren Backkammern**
Baking oven with multiple baking chambers
Four de cuisson doté de plusieurs chambres de cuisson

(43) Veröffentlichungstag der Anmeldung: 10.12.2014
(73) Patentinhaber: BASAG Bäckereieinrichtungen GmbH, 3534 Signau (CH)
(72) Erfinder: Bürer, Urs, 3184 Wünnewil (CH)
(74) Vertreter: BOVARD AG

(56) Entgegenhaltungen:
- EP-A1- 0 002 702
- EP-A2- 2 146 147
- CH-A- 310 812
- DE-A1- 2 528 435
- DE-A1- 2 829 910
- DE-A1- 19 611 887
- DE-U- 7 245 033

## Beschreibung

Die vorliegende Erfindung bezieht sich auf einen Backofen mit einem Ofen und Zuleitungen sowie mehreren Backkammern, die jeweils mit einem ersten Heizorgan für die Oberhitze und einem zweiten Heizorgan für die Unterhitze versehen sind, und jeder Backkammer mindestens ein Temperaturfühler zugeordnet ist, welche jeweils mit einer Steuerung zusammenwirken, und jedem Heizorgan ein Stellglied zugeordnet ist, welche mit der Steuerung verbunden sind und über welche die Heizorgane aktivierbar und deaktivierbar sind, abhängig von der jedem Heizorgan vorgegebenen Solltemperatur und der von der durch den entsprechenden Temperaturfühler festgestellten Isttemperatur, wobei die ersten Heizorgane und die zweiten Heizorgane Kanäle sind, welche oberhalb und unterhalb der jeweiligen Backkammer angeordnet sind, und durch welche Kanäle heisses Rauchgas durchleitbar ist, welches in einem Ofen für fossile Brennstoffe erzeugbar und über Zuleitungen in die Kanäle leitbar ist, wobei die Stellglieder Verschliesselemente sind, mittels welchen die Kanäle bezüglich der Zuleitungen verschliessbar sind, und wobei die Verschliesselemente Schieber sind.

Derartige Backöfen sind in vielfältiger Weise bekannt. Diese weisen jeweils mehrere Backkammern auf, häufig sind beispielsweise Backöfen mit drei Backkammern oder vier Backkammern. Jede dieser Backkammern ist mit zwei Heizorganen versehen, das erste Heizorgan liefert die Oberhitze in der Backkammer, das zweite Heizorgan liefert die Unterhitze dieser Backkammer.

Derartige Backöfen, bei welchen die Heizorgane elektrische Heizkörper sind, die für die gewünschte Oberhitze und Unterhitze in der jeweiligen Backkammer sorgen, sind bekannt. So zeigt beispielsweise die Veröffentlichung EP 2 146 147 A2 einen derartigen Backofen.

Es sind auch Backöfen bekannt, bei welchen die Backkammern durch heisse Rauchgase beheizt werden, die in einem Feuerraum für fossile Brennstoffe erzeugt werden und über ein Kanalsystem an der Oberseite und an der Unterseite der entsprechenden Backkammer vorbeigeführt werden, wodurch ebenfalls die Oberhitze und die Unterhitze erzeugt werden können. Diese Backöfen sind so ausgelegt, dass bei allen Backkammern gleichzeitig die Oberhitze und die Unterhitze zugeschaltet werden können. Derartige Backöfen sind den Dokumenten DE 28 29 910 A1 und DE 25 28 435 entnehmbar, wobei das erstgenannte Dokument den nächstliegenden Stand der Technik darstellt. Entsprechend muss die Energiezuführung ausgelegt werden. Diese muss ermöglichen, dass sämtliche Heizorgane eines Backofens gleichzeitig aktiviert sein können. Entsprechend gross muss die zur Verfügung stehende Kapazität sein, bei mit fossilen Brennstoffen beheizbaren Öfen muss die Ofenkapazität gross sein. All diese erforderlichen und zu treffenden Vorkehrungen verteuern die Backöfen selbst sowie deren Betrieb.

Die Aufgabe der vorliegenden Erfindung besteht somit darin, den Energiebedarf von mit fossilen Brennstoffen beheizbaren Backöfen zu reduzieren und deren Betrieb kostengünstiger gestalten zu können.

Erfindungsgemäss erfolgt die Lösung dieser Aufgabe dadurch, dass die dem Backofen zuführbare Heizenergie so gross ist, dass immer nur ein Teil der ersten Heizorgane und zweiten Heizorgane gemeinsam aktivierbar sind, während die anderen ersten Heizorgane und zweiten Heizorgane deaktiviert sind, und dass diejenigen Heizorgane aktiviert sind, bei welchen der Unterschied zwischen Solltemperatur und Isttemperatur einen vorgebbaren Wertbereich überschreitet, und dass die Schieber derart angeordnet sind, dass die Kanäle von jeweils einem Teil der Backkammern des Backofens geöffnet und die Kanäle der jeweils anderen Backkammern geschlossen sind.

Mit dieser Lösung wird immer nur ein Teil der ersten Heizorgane und der zweiten Heizorgane eines Backofens gemeinsam aktiviert, was gleichbedeutend ist, dass nur so viel Heizenergie dem Backofen zugeführt werden muss, wie dieser Teil der aktivierten Heizorgane benötigt. Die anderen ersten Heizorgane und zweiten Heizorgane sind deaktiviert, wenn der erste Teil der ersten Heizorgane und zweiten Heizorgane die gewünschte Temperatur erreicht hat, werden diese deaktiviert, die zur Verfügung stehende Heizenergie kann dann den anderen ersten Heizorgangen und zweiten Heizorganen oder
einem Teil davon zugeführt werden. Durch diese Ansteuerung ausgewählter erster Heizorgane und zweiter Heizorgane kann die Spitze der zuzuführenden Heizenergie reduziert werden, wodurch die oben erwähnten Vorteile erreicht werden können.

In vorteilhafter Weise erfolgt die Feststellung des Unterschieds zwischen Solltemperatur und Isttemperatur der ersten Heizorgane und zweiten Heizorgane und die entsprechende Aktivierung intervallmässig. Intervallmässig werden die gemessenen Temperaturen in der Steuerung verarbeitet. Dabei wird die zur Verfügung stehende Heizenergie während dieses Intervalls dem Heizorgan bzw. den Heizorganen zugeführt, welches bzw. welche vorrangig vor dem bzw. den anderen den grössten Bedarf haben. Dadurch ist gewährleistet, dass die Zuteilung der Heizenergie in optimaler Weise erfolgt.

Die Schieber sind derart angeordnet, dass die Kanäle von jeweils einem Teil der Backkammern des Backofens geöffnet und die Kanäle der jeweils andern Backkammern geschlossen sind. Durch diese Anordnung wird erreicht, dass mit einer geringstmöglichen Anzahl von Schiebern die gewünschte Zuleitung der heissen Rauchgase in den entsprechenden Kanal ermöglich wird, was den Aufbau der Einrichtung vereinfacht.

In vorteilhafter Weise sind die Schieber entlang Führungen vor den Durchgangsöffnungen, die zwischen Kanal und Zuleitung angebracht sind, motorisch verschiebbar, was eine einfache Ansteuerung ermöglicht.

In vorteilhafter Weise sind die Schieber zum Verschieben entlang der Führungen mit Zahnstangen versehen, welche mit am Backofen angeordneten, motorisch antreibbaren Ritzeln in Wirkverbindung stehen. Durch diesen einfachen Aufbau des Antriebsmechanismus der Schieber wird eine optimale Funktionsweise gewährleistet.

In vorteilhafter Weise münden die Kanäle in einen Abluftkanal, durch welchen die Rauchgase in optimaler Weise abführbar sind.

In vorteilhafter Weise sind in den Zuleitungen und/oder im Abluftkanal Ventilatoren angeordnet, durch welche die Strömungsgeschwindigkeit der Rauchgase verändert werden kann.

Eine Ausführungsform der Erfindung werden nachfolgend anhand der beiliegenden Zeichnung beispielhaft näher erläutert.

Es zeigt:
Figur 1 einen schematischen Aufbau eines erfindungsgemässen Backofens, mit vier Backkammern;
Figur 2 in schematischer Darstellung das taktweise Zu- und Abschalten der Heizorgane eines Backofens mit drei Backkammem in Abhängigkeit der Temperatur;
Figur 3 eine Seitenansicht eines Backofens mit drei Backkammern, deren Beheizung durch Verbrennen fossiler Brennstoffe erfolgt;
Figur 4 eine Draufsicht auf einen Kanal eines Heizorgans des Backofens gemäss Figur 3;
Figuren 5a bis 5c eine Schnittdarstellung der Zuleitung des Backofens gemäss Fig. 3, wobei unterschiedliche Schieberstellungen dargestellt sind; und
Figuren 6a bis 6c in räumlicher Darstellung eine Ansicht auf die in der Zuleitung angeordneten Schieber gemäss den Figuren 5a bis 5c zum Teil im Schnitt, mit unterschiedlichen Stellungen der Schieber.

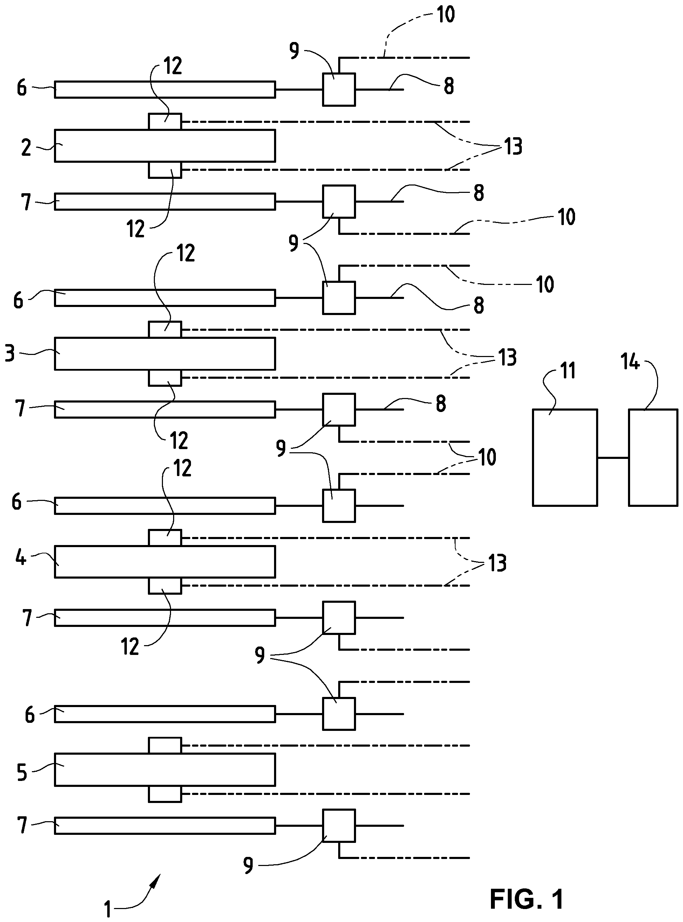

Fig. 1 zeigt einen Backofen 1 mit vier Backkammem 2, 3, 4 und 5. Jede dieser Backkammern 2 bis 5 ist mit einem ersten Heizorgan 6 zur Erzeugung der Oberhitze und einem zweiten Heizorgan 7 zur Erzeugung der Unterhitze ausgestattet. Jedes dieser ersten Heizorgane 6 und zweiten Heizorgane 7 ist mit einer Zuführleitung 8 versehen, über welche dem jeweils ersten Heizorgan 6 oder zweitem Heizorgan 7 Energie zum Heizen zugeführt werden kann. In jede Zuführleitung 8 ist ein Stellglied 9 eingesetzt, über welches die Zuführleitung 8 zuschaltbar oder abschaltbar ist. Jedes dieser Stellglieder 9 ist über eine Leitung 10 in bekannter, nicht dargestellter Weise mit einer Steuerung 11 verbunden.

Jedem ersten Heizorgan 6 und jedem zweiten Heizorgan 7 ist ein Temperaturfühler 12 zugeordnet, mit welchem die Oberhitze beziehungsweise die Unterhitze von jeder Backkammer 2 bis 5 festgestellt werden kann. Jeder Temperaturfühler 12 ist in bekannter, nicht dargestellter Weise über eine weitere Leitung 13 mit der Steuerung 11 verbunden. Der Steuerung 11 zugeordnet sind Eingabe- und Anzeigemittel 14, über welche der Steuerung in bekannter Weise Backprogramme für die einzelnen Backkammern 2 bis 5 und gegebenenfalls Zeit- und Temperaturangaben eingegeben werden können und auf welchen die erforderlichen Informationen für die Bedienung des Backofens angezeigt werden können.

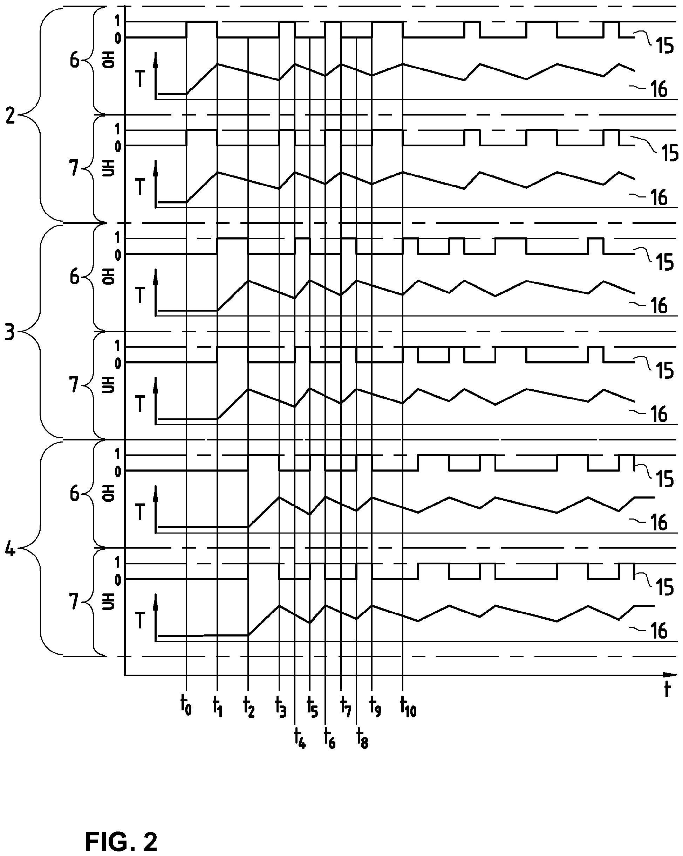

Figur 2 zeigt ein Schema eines Backofens mit drei Backkammem 2, 3 und 4. Jede dieser Backkammern 2, 3 und 4 ist mit einem ersten Heizorgan 6 und einem zweiten Heizorgan 7 ausgestattet. Für jedes erste Heizorgan 6 und jedes zweite Heizorgan 7 ist in Figur 2 ein erstes Diagramm 15 dargestellt, aus welchem jeweils die Schaltstellung des Stellgliedes 9 (Figur 1) in Abhängigkeit der Zeit t und somit ersichtlich ist, ob den jeweiligen Heizorganen 6 bzw. 7 Energie zugeführt wird oder nicht.

Jedem ersten Heizorgan 6 und jedem zweiten Heizorgan 7 ist in Figur 2 ein zweites Diagramm 16 zugeordnet, welches die Temperatur T in Abhängigkeit der Zeit t zeigt.

Eine mögliche Funktionsweise eines Backofens mit drei Backkammern 2, 3 und 4 wird nachfolgend mit Bezugnahme auf die Figur 2 näher beschrieben. Dem Backofen mit drei Backkammern 2, 3 und 4, wie er in Figur 2 dargestellt ist, wird so viel Heizenergie zur Verfügung gestellt, wie benötigt wird, um zwei der Heizorgane 6 und 7 heizen zu können. Dies bedeutet, dass zur gleichen Zeit nur zwei der Heizorgane 6 und 7 gleichzeitig aufgeheizt werden können, die anderen vier Heizorgane des Backofens können nicht zugeschaltet werden. Bei einem Backofen, bei welchem die Heizenergie durch Verbrennen von fossilen Brennstoffen erzeugt wird, kann der Feuerraum kleiner dimensioniert und die Menge der zu verbrennenden fossilen Brennstoffe reduziert werden, was sich auch günstig auf die Unterhaltskosten auswirkt. Im in Figur 2 dargestellten Beispiel wird die Heizenergie jeweils gemeinsam einem ersten Heizorgan 6 und einem zweiten Heizorgan 7 einer der Backkammern 2, 3 oder 4 zugeordnet. Die anderen Heizorgane sind abgeschaltet.

Bei der Inbetriebnahme des Backofens wird, wie in Figur 2 dargestellt ist, folgendermassen verfahren: zum Zeitpunkt to werden das erste Heizorgan 6 und das zweite Heizorgan 7 der Backkammer 2 eingeschaltet. Die Temperaturen steigen entsprechend an. Zum Zeitpunkt t₁ zeigen die Temperaturfühler 12 (Figur 1) an, dass die gewünschte Solltemperatur erreicht ist. Diese Backkammer 2 steht somit für einen Backvorgang zur Verfügung. Die beiden Heizorgane 6, 7 der Backkammer 2 werden ausgeschaltet. Die Heizenergie steht nun für zwei andere Heizorgane 6 und 7 zur Verfügung. Zum Zeitpunkt t₁ kann somit das erste Heizorgan 6 und das zweite Heizorgan 7 der Backkammer 3 zugeschaltet werden, bis auch diese die gewünschte Solltemperaturen erreichen, was zum Zeitpunkt t₂ der Fall ist. Danach werden auch diese Heizorgane abgeschaltet, die Heizenergie steht nun wiederum für andere Heizorgane zur Verfügung. Zum Zeitpunkt t₂ werden dann das erste Heizorgan 6 und das zweite Heizorgan 7 der Backkammer 4 zugeschaltet, bis auch hier die gewünschten Solltemperaturen erreicht sind, was zum Zeitpunkt t₃ erfolgt, auch diese Heizorgane werden dann abgeschaltet.

Es ist auch denkbar, dass alle drei Backkammern 2, 3 und 4 gemeinsam aufgeheizt werden sollen. Während eines ersten Zeitintervalls sind die beiden Heizorgane 6 und 7 der ersten Backkammer 2 zugeschaltet, während eines zweiten Zeitintervalls sind die beiden Heizorgane 6 und 7 der zweiten Backkammer 3 zugeschaltet, während eines dritten Zeitintervalls sind die beiden Heizorgane 6 und 7 der dritten Backkammer 4 zugeschaltet. Während jedem weiteren Zeitintervall wird die zur Verfügung stehende Heizenergie derjenigen Backkammer zugeführt, welche vorrangig einen Heizenergiebedarf anmeldet. Hierdurch wird auch erreicht, dass die Solltemperatur der Backkammern 2, 3 und 4 durch intervallmässige Heizenergiezufuhr erreicht wird, was gleichbedeutend ist, dass die jeweilige Solltemperatur "sanft" erreicht wird und ein grösseres Überschreiten der Solltemperatur vermieden wird, was sich auf die Backqualität positiv auswirkt.

Wenn die Heizorgane 6, 7 der Backkammern 2, 3 bzw. 4 ausgeschaltet sind, sinkt die Temperatur aufgrund von Wärmeverlusten ab, was aber relativ langsam erfolgt, da während des Aufheizens der entsprechenden Backkammern die Wärme in der Gehäusemasse der entsprechenden Backkammern gespeichert bleibt und zudem die Backkammern gegen aussen isoliert sind. Wenn die Heizenergie zum Zeitpunkt t₃ zur Verfügung steht, wird über die Temperaturfühler 2 (Figur 1) in den Backkammern festgestellt, wo der Heizenergiebedarf vorrangig am grössten ist bzw. wo die gemessene Isttemperatur die grösste Differenz zu einem vorgebbaren Wertbereich unterhalb der gewünschten Solltemperatur aufweist. Dies wird in der Steuerung 11 (Figur 1) in bekannter Weise ermittelt, die Steuerung 11 bewirkt dann ein Zuschalten des ersten Heizorgans 6 und des zweiten Heizorgans 7 von derjenigen der Backkammer 2, 3 oder 4, bei welcher der Bedarf an Heizenergie am grössten ist. Im in Figur 2 dargestellten Beispiel ist dies zum Zeitpunkt t₃ die Backkammer 2, das erste Heizorgan 6 und das zweite Heizorgan 7 werden eingeschaltet, die Temperatur wird erhöht, zum Zeitpunkt t₄ ist die Backkammer 2 aufgeheizt, die entsprechenden Heizorgane 6 und 7 werden abgeschaltet. Die zur Verfügung stehende Heizenergie wird dann der Backkammer 3 bzw. deren Heizorgane 6 und 7 zugeführt, da der Wärmebedarf hier am grössten ist.

Die Steuerung der Heizenergiezufuhr wird entsprechend weitergeführt, zu den Zeitpunkten t₅ bis t₉ erfolgt jeweils eine entsprechende Umschaltung.

Im Beispiel gemäss Figur 2 soll zum Zeitpunkt t₉ die Backkammer 2 für einen neuen Backvorgang auf eine höhere Temperatur gebracht werden, dadurch wird die Heizenergiezufuhr für diese Backkammer 2 etwas länger dauern, was sich über mehrere Intervalle erstrecken kann, bis zum Zeitpunkt t₁₀ diese höhere Temperatur ebenfalls erreicht ist und die Heizenergie für die anderen Backkammern wiederum zur Verfügung steht.

Wie bereits erwähnt worden ist, erfolgt die Abfolge der Steuerung vorzugsweise intervallmässig. Jeweils nach einem bestimmten Zeitintervall erfolgt die Messung der Temperaturen und die entsprechende Umschaltung der Stellglieder. Ein derartiger Mess- und Stellvorgang kann beispielsweise im Minutentakt erfolgen.

Mit dieser optimierten Heizenergiezufuhr in einem Backofen kann die zur Verfügung stehende Heizenergie jeweils gemäss dem Bedarf den einzelnen Backkammern zugeführt werden, wodurch erreicht werden kann, dass die erforderliche Heizenergiespitze gering gehalten werden kann, wodurch entsprechend auch Energie eingespart werden kann.

Im vorgängig beschriebenen Beispiel sind drei Backkammern vorhandeln, wobei für jede Backkammer jeweils die Oberhitze und die Unterhitze parallel geschaltet sind. Selbstverständlich ist eine derartige Anordnung auch für Backöfen anwendbar, die beispielsweise zwei oder vier oder eine andere Anzahl von Backkammern aufweist, bei einer grossen Anzahl von Backkammern können beispielsweise auch vier Heizorgane miteinander betrieben werden, es ist auch denkbar, Ober- und Unterhitze voneinander getrennt anzusteuern. Durch die Vielfalt der Möglichkeiten können Backöfen für jegliche Art von Bedürfnissen angepasst werden.

Die Backkammern können auch hintereinander angeordnet sein, sodass ein Tunnel gebildet wird. Durch diesen sogenannten Tunnelofen hindurch ist ein Band geführt, auf welchem das Backgut angeordnet und mit einer einstellbaren Geschwindigkeit durch den Tunnel gefahren werden kann. Das Backgut durchläuft dann die hintereinander angeordneten Backkammern, die auch als Backzonen bezeichnet werden. Diese Backzonen können ebenfalls mit Heizorganen für die Oberhitze und Unterhitze ausgestattet sein. Die Ansteuerung dieser Heizorgane kann in derselben Weise erfolgen, wie vorgängig beschrieben worden ist, wodurch dieselben Vorteile erreichbar sind.

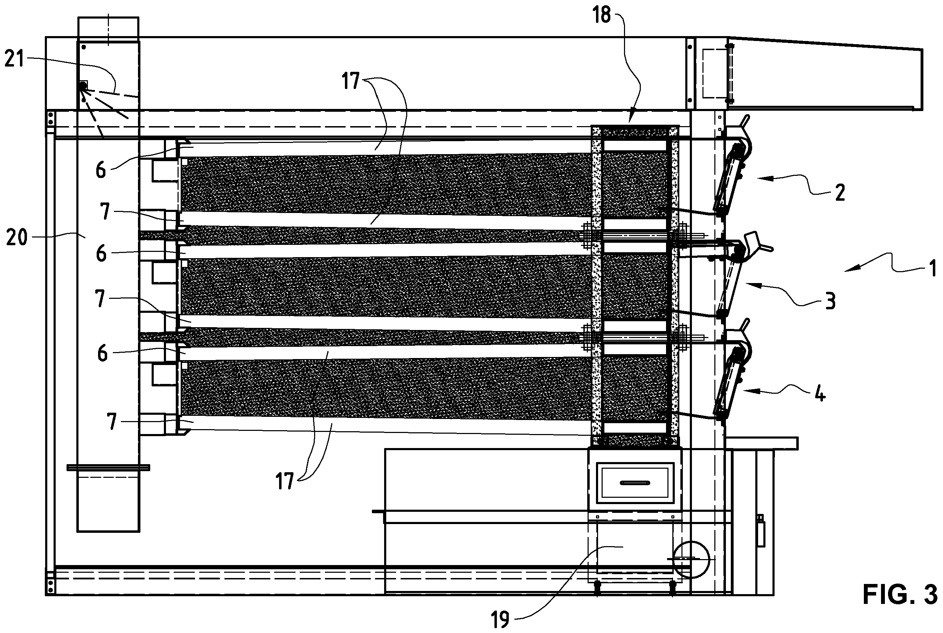

Mit Bezugnahme auf die Figuren 3 bis 6 wird nachfolgend ein Backofen näher beschrieben, der mit einem Feuerraum zur Verbrennung von fossilen Brennstoffen ausgestattet ist, mit welchem die Heizenergie erzeugt wird. Aus Figur 3 ist ersichtlich, dass der Backofen 1 mit drei Backkammern 2, 3 und 4 ausgestattet ist. Oberhalb und unterhalb von jeder Backkammer 2, 3 und 4 ist jeweils ein erstes Heizorgan 6 und ein zweites Heizorgan 7 angeordnet, die jeweils als Kanal 17 ausgebildet sind, wie später noch im Detail beschrieben wird. Jeder der Kanäle 17 ist mit einer kanalförmigen Zuleitung 18 verbunden, die ihrerseits in bekannter Weise mit dem Feuerraum eines Ofens 19 verbunden ist, in welchem ebenfalls in bekannter Weise fossile Brennstoffe verbrannt werden können.

Aus dem Feuerraum 19 gelangen somit die heissen Rauchgase über die kanalförmige Zuleitung 18 in die jeweiligen Kanäle 17, durchströmen diese und werden über einen Abluftkanal 20, in welchen die Kanäle 17 münden, abgeleitet. In diesem Abluftkanal 20 ist eine Klappe 21 angeordnet, mit welcher die Durchflussmenge des ausströmenden Gases in Abluftkanal 20 geregelt werden kann.

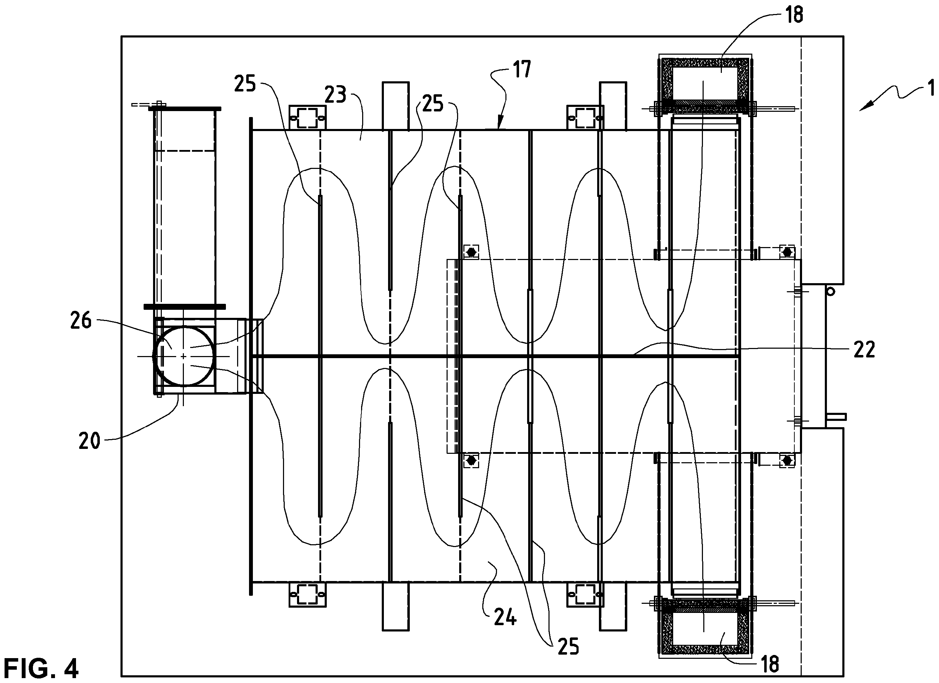

Aus Figur 4 ist die Ausgestaltung eines Kanals 17 ersichtlich, welcher jeweils oberhalb und unterhalb von jeder Backkammer angeordnet ist. Dieser Kanal 17 ist in diesem Ausführungsbeispiel zweiteilig ausgebildet, d.h. in der Mitte durch eine Trennwand 22 unterteilt. Der Kanal 17 ist somit auf beiden Seiten mit einer kanalförmigen Zuleitung 18 verbunden. Das aus der jeweiligen kanalförmigen Zuleitung 18 zugeführte heisse Rauchgas durchläuft die jeweilige Kammer 23 bzw. 24 des Kanals 17, wobei in den beiden Kammern 23 und 24 Leitbleche 25 angeordnet sind, sodass das Rauchgas auf einem vorbestimmten Weg durch die Kammern 23 und 24 strömen muss, wodurch gewährleistet ist, dass das heisse Rauchgas die entsprechende Kammer 23 und 24 vollflächig aufheizen kann. Das Rauchgas aus beiden Kammer 23 und 24 wird in den Abluftkanal 20 geführt, wo dieses abgeführt werden kann. In diesen Abluftkanal 20 ist zusätzlich noch ein Ventilator 26 eingesetzt, mittels welchen das Rauchgas aus den Kammern 23 und 24 abgesaugt werden kann, sodass die Strömungsgeschwindigkeit des Rauchgases in den Kammern 23 und 24 beeinflusst werden kann.

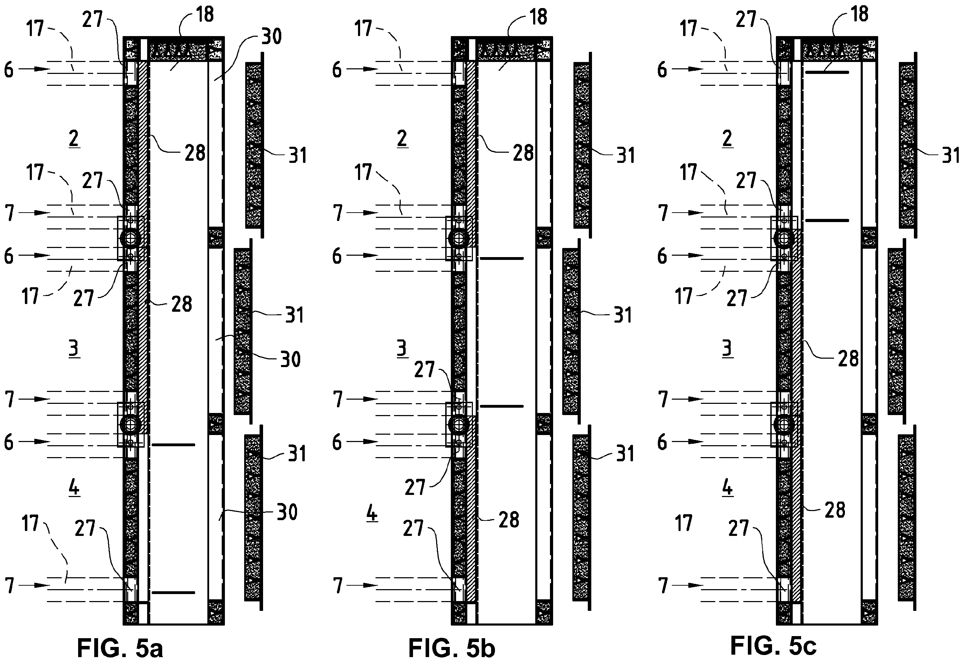

In den Figuren 5a bis 5c ist jeweils im Schnitt einer kanalförmigen Zuleitung 18 dargestellt. Das vom Feuerraum 19 her kommende heisse Rauchgas strömt in diese kanalförmige Zuleitung 18 von unten ein, die Ausströmung in die Kanäle 17 des jeweiligen ersten Heizorgans 6 und zweiten Heizorgans 7 erfolgt jeweils durch in der kanalförmigen Zuleitung 18 angebrachte Durchgangsöffnungen 27.

In der kanalförmigen Zuleitung 18 sind Schieber 28 angeordnet, mit welchen die Durchgangsöffnungen 27 verschlossen oder geöffnet werden können. Diese Schieber 28 sind, wie später noch im Detail beschrieben wird, vertikal verfahrbar und angetrieben. Die den Durchgangsöffnungen 27 und den Schiebern 28 gegenüberliegende Seite 29 der kanalförmigen Zuleitung 18 ist mit Bedieneröffnungen 30 versehen, die mit jeweils einem Deckel 31 verschliessbar sind.

Bei der hier dargestellten Ausführungsform sind für drei Backkammern 2, 3 und 4 mit jeweils einem ersten Heizorgan 6 und einem zweiten Heizorgan 7 zwei Schieber 28 vorgesehen. Wie aus Figur 5a ersichtlich ist, kann der obere Schieber 28 in der oberen Position die Durchgangsöffnungen 27 für das erste Heizorgan 6 und das zweite Heizorgan 7 der obersten Backkammer 2 verschliessen. Der untere Schieber 28 befindet sich in der mittleren Position, wodurch die Durchgangsöffnungen 27 der mittleren Backkammer 3 zum ersten Heizorgan 6 und zweiten Heizorgan 7 verschlossen sind. Die Durchgangsöffnungen 27 der unteren Backkammer 4 sind hier offen, die untere Backkammer 4 wird in Betrieb somit beheizt.

In Figur 5b ist der obere Schieber 28 weiterhin in seiner oberen Position und verschliesst die entsprechenden Durchgangsöffnungen 27 für die obere Backkammer 2, der untere Schieber 28 ist in die untere Position verschoben worden, er verschliesst dadurch die Durchgangsöffnungen 27 der unteren Backkammer 4, bei der mittleren Backkammer 3 sind die Durchgangsöffnungen 27 offen, in dieser Situation wird somit die mittlere Backkammer 3 über das erste Heizorgan 6 und das zweite Heizorgan 7 beheizt.

In Figur 5c befindet sich der untere Schieber 28 in seiner unteren Position, der obere Schieber 28 ist in die mittlere Position verfahren worden, sodass die mittlere Backkammer 3 und die untere Backkammer 4 abgeschaltet sind, die obere Backkammer 2 wird in dieser Situation beheizt.

Die Steuerung der Schieber 28 in die gemäss den Figuren 5a bis 5c vorgesehenen Positionen erfolgt in der vorgängig zu Figur 2 beschriebenen Weise.

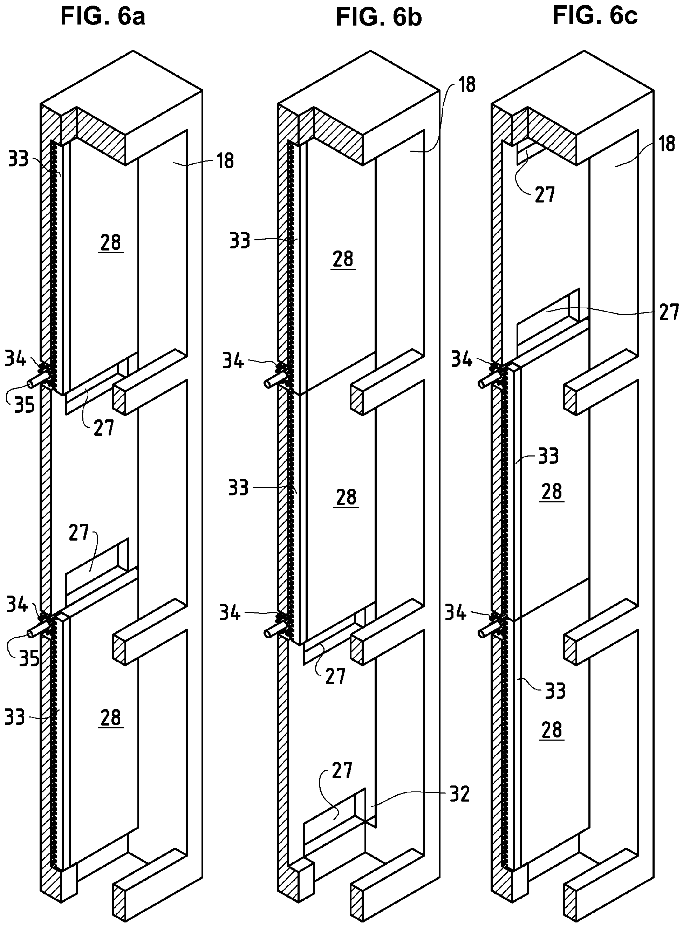

Die Figuren 6a bis 6c zeigen die kanalförmige Zuleitung 18 mit den darin angebrachten Schiebern 28, entsprechend den Figuren 5a bis 5c mit den entsprechenden Positionen der Schieber 28. Die Schieber 28 sind im Gehäuse der kanalförmigen Zuleitung 18 in beidseits angeordneten Führungen 32, die als Längsschlitze ausgebildet sind, linear verschiebbar geführt, wie insbesondere aus Figur 6b ersichtlich ist. Um die Schieber 28 entlang dieser Längsschlitze 32 verschieben zu können und jeweils die entsprechenden Durchgangsöffnungen 27 verschliessen oder öffnen zu können, sind diese seitlich mit Zahnstangen 33 versehen. Jede dieser Zahnstangen 33 ist immer im Eingriff mit einem Zahnritzel 34, das entsprechend im Gehäuse der kanalförmigen Zuleitung 18 angeordnet ist. Auf der über die kanalförmige Zuleitung 18 vorstehenden Achse 35 dieses Zahnritzels 34 kann in nicht dargestellter, bekannter Weise ein Kettenrad angebracht sein, dass über eine Kette und einen entsprechenden Antriebsmotor das Zahnritzel 34 entsprechend in Drehung versetzen kann und dadurch die Schieber in die entsprechende Position bringen kann.

Mit dieser Ausgestaltung lassen sich drei Backkammern eines Backofens in einfacher Weise entsprechend dem zu Figur 2 beschriebenen Verfahren beheizen, wobei die Konstruktion sehr einfach ist. Selbstverständlich könnten auch mit diesem System beispielsweise vier Backkammern entsprechend angesteuert werden, wobei drei Schieber eingesetzt werden müssten und jeweils immer eine Backkammer beheizbar ist.

Gemäss der vorgängig beschriebenen Erfindung lassen sich Backkammer von Backöfen mit einem geringst möglichen Energieaufwand heizen, wodurch entsprechend Kosten eingespart werden können. Zudem wird die Energiezufuhr optimiert, die Zuführung der Energie erfolgt sehr gleichmässig, übermässige Energiespitzen werden vermieden, was sich auf die Backqualität auswirkt.

## Patentansprüche

1. Backofen (1) mit einem Ofen (19) und Zuleitungen (18) sowie mehreren Backkammern (2,3,4,5), die jeweils mit einem ersten Heizorgan (6) für die Oberhitze und einem zweiten Heizorgan (7) für die Unterhitze versehen sind, und jeder Backkammer (2, 3, 4, 5) mindestens ein Temperaturfühler (12) zugeordnet ist, welche jeweils mit einer Steuerung (11) zusammenwirken, und jedem Heizorgan (6,7) ein Stellglied (9) zugeordnet ist, welche mit der Steuerung (11) verbunden sind und über welche die Heizorgane (6, 7) aktivierbar und deaktivierbar sind, abhängig von der jedem Heizorgan (6, 7) vorgegebenen Solltemperatur und der von der durch den entsprechenden Temperaturfühler (12) festgestellten Isttemperatur, wobei die ersten Heizorgane (6) und die zweiten Heizorgane (7) Kanäle (17) sind, welche oberhalb und unterhalb der jeweiligen Backkammer (2, 3, 4, 5) angeordnet sind, und durch welche Kanäle (17) heisses Rauchgas durchleitbar ist, welches in einem Ofen (19) für fossile Brennstoffe erzeugbar und über Zuleitungen (18) in die Kanäle (17) leitbar ist, wobei die Stellglieder (9) Verschliesselemente sind, mittels welchen die Kanäle (17) bezüglich der Zuleitungen (18) verschliessbar sind, und wobei die Verschliesselemente Schieber (28) sind, **dadurch gekennzeichnet, dass** die dem Backofen (1) zuführbare Heizenergie so gross ist, dass immer nur ein Teil der ersten Heizorgane (6) und zweiten Heizorgane (7) gemeinsam aktivierbar sind, während die anderen ersten Heizorgane (6) und zweiten Heizorgane (7) deaktiviert sind, und dass diejenigen Heizorgane (6, 7) aktiviert sind, bei welchen der Unterschied zwischen Solltemperatur und Isttemperatur einen vorgebbaren Wertbereich überschreitet, und dass die Schieber (28) derart angeordnet sind, dass die Kanäle (17) von jeweils einem Teil der Backkammern (2, 3, 4, 5) des Backofens (1) geöffnet und die Kanäle (17) der jeweils anderen Backkammern (2, 3, 4, 5) geschlossen sind.

2. Backofen nach Anspruch 1 **dadurch gekennzeichnet, dass** die Feststellung des Unterschieds zwischen Solltemperatur und Isttemperatur der ersten Heizorgane (6) und zweiten Heizorgane (7) und die entsprechende Aktivierung intervallmässig erfolgt.

3. Backofen nach Anspruch 1 oder 2, **dadurch gekennzeichnet, dass** die Schieber (28) entlang Führungen (32) vor den Durchgangsöffnungen (27), die zwischen Kanal (17) und Zuleitung (18) angebracht sind, motorisch verschiebbar sind.

4. Backofen nach Anspruch 3, **dadurch gekennzeichnet, dass** die Schieber (28) zum Verschieben entlang der Führungen (32) mit Zahnstangen (33) versehen sind, welche mit am Backofen (1) angeordneten, motorisch antreibbaren Ritzel (34) in Wirkverbindung stehen.

5. Backofen nach einem der Ansprüche 1 bis 4, **dadurch gekennzeichnet, dass** die Kanäle (18) in einen Abluftkanal (20) münden.

6. Backofen nach Anspruch 5, **dadurch gekennzeichnet, dass** in den Zuleitungen (18) und/oder im Abluftkanal (20) Ventilatoren (26) angeordnet sind.

## Claims

1. Baking oven (1) with an oven (19) and supply lines (18) as well as a plurality of baking chambers (2,3,4,5), which are each provided with a first heating element (6) for the top heat and a second heating element (7) for the bottom heat, and each baking chamber (2, 3, 4, 5) is assigned at least one temperature sensor (12), which each co-operate with a control unit (11), and each heating element (6,7) is assigned an actuator (9), which are connected to the control unit (11) and via which the heating elements (6, 7) are able to be activated and deactivated, as a function of the set temperature predetermined for each heating element (6, 7) and that of the actual temperature determined by the corresponding temperature sensor (12), the first heating elements (6) and the second heating elements (7) being channels (17), which are disposed above and below the respective baking chamber (2, 3, 4, 5), and through which heating channels (17) hot flue gas is able to be conducted, which is able to be generated in an oven (19) for fossil fuels and is able to be conducted via supply lines (18) into the channels (17), the actuators (9) being closing elements, by means of which the channels (17) are closable with respect to the supply lines (18), and the closing elements being slide valves (28), **characterized in that** heating energy able to be supplied to the baking oven (1) is so large that always only a part of the first heating elements (6) and second heating elements (7) are able to be activated together, while the other first heating elements (6) and second heating elements (7) are deactivated, and **in that** those heating elements (6, 7) are activated where the difference between the set temperature and the actual temperature exceeds a predefined value range, and **in that** the slide valves (28) are disposed in such a way that the channels (17) of respectively a part of the baking chambers (2, 3, 4, 5) of the baking oven (1) are opened and the channels (17) of the respectively other baking chambers (2, 3, 4, 5) are closed.

2. Baking oven according to claim 1 **characterized in that** the determination of the difference between the set temperature and the actual temperature of the first heating elements (6) and second heating elements (7) and the corresponding activation takes place at intervals.

3. Baking oven according to claim 1 or 2, **characterized in that** the slide valves (28) are displaceable, in a motorized way along guides (32), in front of the passage openings (27), which are provided between channel (17) and supply line (18).

4. Baking oven according to claim 3, **characterized in that**, for displacement along the guides (32), the slide valves (28) are provided with toothed racks (33), which are in operative connection with pinions (34), drivable by motor, which are disposed on the baking oven (1).

5. Baking oven according to one of the claims 1 to 4, **characterized in that** the channels (18) <sic. (17)> come out into an exhaust duct (20).

6. Baking oven according to claim 5, **characterized in that** ventilators (26) are disposed in the supply lines (18) and/or in the exhaust duct (20).

## Revendications

1. Four de cuisson (1) doté d'un four (19) et de conduits d'alimentation (18) ainsi que de plusieurs chambres de cuisson (2, 3, 4, 5), qui sont chacune munies d'un premier élément chauffant (6) pour le chauffage par le haut et d'un deuxième élément chauffant (7) pour le chauffage par le bas, et au moins un capteur de température (12) étant affecté à chaque chambre de cuisson (2, 3, 4, 5), lesquels coopèrent chacun avec une unité de contrôle (11), et un actionneur (9) étant affecté à chaque élément chauffant (6, 7), lesquels sont reliés à l'unité de contrôle (11) et par l'intermédiaire desquels les éléments chauffants (6, 7) peuvent être activés et désactivés, en fonction de la température de réglage prédéterminée pour chaque élément chauffant (6,7) et celle de la température réelle déterminée par le capteur de température correspondant (12), le premier élément chauffant (6) et le deuxième élément chauffant (7) étant des canaux (17), qui sont disposés en-dessus et en-dessous de la chambre de cuisson respective (2, 3, 4, 5), et à travers lesquels canaux de chauffage (17) du gaz de combustion chaud peut être conduit, qui peut être généré dans un four (19) à combustibles fossiles, et peut être conduit dans les canaux (17) via des tuyaux d'alimentation (18), les actionneurs (9) étant des éléments de fermeture, au moyen desquels les canaux (18) peuvent être fermés par rapport aux tuyaux d'alimentation (18), et les éléments de fermeture étant des vannes (28), **caractérisé en ce que** l'énergie chauffante pouvant être acheminée au four de cuisson (1) est tellement grande que seulement une partie des premiers éléments chauffants (6) et des deuxièmes éléments chauffants (7) peuvent être activés conjointement alors que les autres premiers éléments chauffants (6) et deuxièmes éléments chauffants (7) sont désactivés, et **en ce que** ces éléments chauffants (6, 7) sont activés là où la différence entre la température de réglage et la température réglée dépasse une plage de valeurs prédéterminée, et **en ce que** les vannes (28) sont disposées de manière à ce que les canaux (17) de respectivement une partie des chambres de cuisson (2, 3, 4, 5) du four de cuisson (1) sont ouverts et les canaux (17) des respectivement autres chambres de cuisson (2, 3, 4, 5) sont fermés.

2. Four de cuisson selon la revendication 1 **caractérisé en ce que** la détermination de la différence entre la température de réglage et la température réelle des premiers éléments chauffants (6) et des deuxièmes éléments chauffants (7) et leur activation correspondante a lieu à différents intervalles.

3. Four de cuisson selon la revendication 1 ou 2, **caractérisé en ce que** les vannes (28) sont déplaçables de façon motorisée le long de glissières (32), en face des orifices de passage (27), qui sont aménagés entre le canal (17) et la conduite d'alimentation (18).

4. Four de cuisson selon la revendication 3, **caractérisé en ce que**, pour un déplacement le long des glissières (32), les vannes (28) sont prévues avec des crémaillères (33), qui sont dans une liaison active avec des pignons (34), menés par un moteur, qui sont disposés sur le four de cuisson (1).

5. Four de cuisson selon l'une des revendications 1 à 4, **caractérisé en ce que** les canaux (17) débouchent sur un canal d'évacuation (20).

6. Four de cuisson selon la revendication 5, **caractérisé en ce que** des ventilateurs (26) sont disposés dans les conduits d'alimentation (18) et/ou dans le canal d'évacuation (20).
